# EUROPÄISCHE PATENTSCHRIFT

(11) **EP 4 653 383 B1**
(45) Veröffentlichungstag und Bekanntmachung des Hinweises auf die Patenterteilung: **14.10.2026**
(21) Anmeldenummer: 25177684.5
(22) Anmeldetag: 20.05.2025
(51) Int. Cl.: B67C 3/00, B67D 7/00, G01F 23/284, B67C 3/28

(54) **VERFAHREN ZUM BETREIBEN EINER ABFÜLLANLAGE UND ABFÜLLANLAGE**
METHOD FOR OPERATING A FILLING SYSTEM, AND FILLING SYSTEM
PROCÉDÉ DE FONCTIONNEMENT D'UNE INSTALLATION DE REMPLISSAGE ET INSTALLATION DE REMPLISSAGE

(30) Priorität: 22.05.2024 DE 102024001651
(43) Veröffentlichungstag der Anmeldung: 26.11.2025
(73) Patentinhaber: KROHNE Messtechnik GmbH, 47058 Duisburg (DE)
(72) Erfinder: Kuschnerus, Dirk, 47802 Krefeld (DE); Lüke, Christopher, 45892 Gelsenkirchen (DE); Walbrecker, Sven, 27639 Wurster Nordseeküste (DE)
(74) Vertreter: Gesthuysen Patentanwälte

(56) Entgegenhaltungen:
- EP-A1- 2 801 875
- EP-B1- 3 995 439
- DE-A1- 102005 035 264
- US-A1- 2007 107 801
- US-A1- 2017 068 257
- US-A1- 2024 101 408

## Beschreibung

Die Erfindung geht aus von einem Verfahren zum Betreiben einer Abfüllanlage zum Abfüllen eines Zielvolumens eines ersten Mediums, wobei die Abfüllanlage wenigstens ein Füllstellenmessgerät, wenigstens ein Kontrollmessgerät aufweist und wenigstens eine Recheneinheit aufweist,
wobei das Füllstellenmessgerät die Abfüllung des Zielvolumens kontrolliert,
wobei das Kontrollmessgerät derart in der Abfüllanlage angeordnet ist, dass es das von dem Füllstellenmessgerät kontrollierte Zielvolumen des abzufüllenden Mediums erfasst, und
wobei das Füllstellenmessgerät und das Kontrollmessgerät mit der Recheneinheit verbunden sind.

Darüber hinaus betrifft die Erfindung eine Abfüllanlage zum Abfüllen eines Zielvolumens eines ersten Mediums, wobei die Abfüllanlage wenigstens ein Füllstellenmessgerät, wenigstens ein Kontrollmessgerät und wenigstens eine Recheneinheit aufweist,
wobei das Füllstellenmessgerät die Abfüllung des Zielvolumens kontrolliert,
wobei das Kontrollmessgerät derart in der Abfüllanlage angeordnet ist, dass es das von dem Füllstellenmessgerät kontrollierte Zielvolumen des abzufüllenden Mediums erfasst, und
wobei das Füllstellenmessgerät und das Kontrollmessgerät mit der Recheneinheit verbunden sind.

Wenn es heißt, dass das Füllstellenmessgerät die Abfüllung eines Zielvolumens kontrolliert und das Kontrollmessgerät das von dem Füllstellenmessgerät kontrollierte Zielvolumen des abzufüllenden Mediums erfasst, impliziert dies natürlich, dass das Füllstellenmessgerät dazu ausgebildet ist, im Betriebszustand das Zielvolumen zu kontrollieren und dass das Kontrollmessgerät dazu ausgebildet ist, im Betriebszustand das von dem Füllstellenmessgerät kontrollierte Zielvolumen des abzufüllenden Mediums zu erfassen.

Abfüllanlagen, die die Abfüllung eines Zielvolumens mittels Messgeräten, beispielsweise mittels Durchflussmessgeräten oder Füllstandmessgeräten kontrollieren, sind aus dem Stand der Technik gut bekannt.

Die zur Kontrolle verwendeten Messgeräte werden meist vor deren Auslieferung mit einem Kalibriermedium, insbesondere mit Wasser, kalibriert.

Weicht nun das abzufüllende Medium von dem Kalibriermedium ab, so kann es vorkommen, dass das Messgerät einen erhöhten Fehler, d.h. eine erhöhte Messabweichung und/oder auch eine schlechtere Wiederholbarkeit der Messwerte aufweist.

Aus der Druckschrift US 2017/0068257 A1 ist ein Verfahren zum Abfüllen eines Mediums bekannt, wobei die Parametrisierung des Abfüllsystems optimiert ist. Das Dokument EP2801875A1 offenbart ein Verfahren zum Betreiben einer Abfüllanlage zum Abfüllen eines Zielvolumens eines ersten Mediums.

Aufgabe der vorliegenden Erfindung ist es daher ein Verfahren zum Betreiben einer Abfüllanlage und eine Abfüllanlage anzugeben, das bzw. die eine besonders geringe Messabweichung und/oder eine besonders gute Wiederholbarkeit aufweist.

Gemäß einer ersten Lehre der vorliegenden Erfindung wird die zuvor dargelegte Aufgabe durch ein eingangs genanntes Verfahren dadurch gelöst,
dass das Verfahren die folgenden Schritte aufweist:
- Durchführen einer ersten Abfüllroutine, wobei die erste Abfüllroutine die folgenden Verfahrensschritte umfasst:
   - Abfüllen eines Zielvolumens unter Kontrolle des Füllstellenmessgeräts,
   - Weiterleiten eines Füllstellenmesswerts des Füllstellenmessgeräts, wobei der Füllstellenmesswert mit dem Zielvolumen korreliert, an die Recheneinheit oder Vorliegen eines Füllstellenmesswerts des Füllstellenmessgeräts, wobei der Füllstellenmesswert mit dem Zielvolumen korreliert, in der Recheneinheit,
   - Erfassung des abgefüllten Zielvolumens durch das Kontrollmessgerät,
   - Weiterleiten eines Kontrollmesswerts des Kontrollmessgeräts an die Recheneinheit, wobei der Kontrollmesswert mit dem Zielvolumen korreliert,
- Durchführen von wenigstens einer zweiten Abfüllroutine, vorzugsweise Durchführung von einer Vielzahl von Abfüllroutinen, sodass in der Recheneinheit wenigstens zwei Füllstellenmesswerte des Füllstellenmessgeräts und wenigstens zwei entsprechende Kontrollmesswerte vorliegen, vorzugsweise wobei in der Recheneinheit eine Vielzahl von Füllstellenmesswerten des Füllstellenmessgeräts und eine Vielzahl von entsprechenden Kontrollmesswerten vorliegt,
- Bestimmung einer ersten Wiederholbarkeit des Füllstellenmessgeräts durch die Recheneinheit aus den Füllstellenmesswerten des Füllstellenmessgeräts und den Kontrollmesswerten und Bewertung der ersten Wiederholbarkeit,
- sofern die erste Wiederholbarkeit oberhalb von einem festgelegten Grenzwert liegt:
   - Variation von zumindest einem Parameter oder von einem Parametersatz zur Ansteuerung des Füllstellenmessgeräts,
   - Durchführung von wenigstens zwei weiteren Abfüllroutinen, wobei das Füllstellenmessgerät mit dem wenigstens einen geänderten Parameter oder dem geänderten Parametersatz angesteuert wird und Bestimmung einer zweiten Wiederholbarkeit,
   - Bewertung der zweiten Wiederholbarkeit durch die Recheneinheit als gut, wenn der Wert der zweiten Wiederholbarkeit kleiner ist als der Wert der ersten Wiederholbarkeit oder Bewertung der zweiten Wiederholbarkeit durch die Recheneinheit als schlecht, wenn der Wert der zweiten Wiederholbarkeit größer ist als der Wert der ersten Wiederholbarkeit.

Erfindungsgemäß wurde erkannt, dass durch den Einsatz eines Kontrollmessgeräts vor oder während dem eigentlichen Abfüllbetrieb die Wiederholbarkeit des Füllstellenmessgeräts durch Variation wenigstens eines Parameters oder eines Parametersatzes zur Ansteuerung des Füllstellenmessgeräts optimiert werden kann. Grundsätzlich wurde also erkannt, dass die Wiederholbarkeit des Füllstellenmessgeräts durch die Parameter zur Ansteuerung des Füllstellenmessgeräts beeinflusst werden kann. Weist das Füllstellenmessgerät im Betrieb eine verbesserte oder optimale Wiederholbarkeit auf, kann beispielsweise eine systematische Abweichung bei der Kontrolle des Zielvolumens durch Berücksichtigung eines Offsets leicht und besonders genau korrigiert werden. Der Offset lässt sich dabei umso genauer bestimmen, je besser die Wiederholbarkeit des Messgeräts bzw. des Messprozesses ist. Bei der erfindungsgemäßen Bestimmung der Wiederholbarkeit entspricht der Wert des Zielvolumens der ersten Abfüllroutine dem Wert des Zielvolumens der zweiten Abfüllroutine bzw. der weiteren Abfüllroutinen.

Beispielsweise kann die erste Wiederholbarkeit des Füllstellenmessgeräts durch Bestimmung der Standardabweichung der Kontrollmesswerte bestimmt werden. Gemäß dieser Ausgestaltung werden die Füllstellenmesswerte für die Berechnung der Wiederholbarkeit verworfen. Beispielsweise entsprechen die Füllstellenmesswerte dem vorgegebenen Wert des Zielvolumens. Die Füllstellenmesswerte sind damit keine echten Messwerte sondern entsprechen dem Vorgabewert des Zielvolumens. In diesem Fall weisen die Füllstellenmesswerte auch keine Standardabweichung auf.

Zudem kann die erste Wiederholbarkeit auch durch Mittelwertbildung der Standardabweichung der Füllstellenmesswerte und der Standardabweichung der Kontrollmesswerte bestimmt werden. Weiterhin kann die erste Wiederholbarkeit auch durch Bestimmung der Standardabweichung der Füllstellenmesswerte und der Kontrollmesswerte bestimmt werden.

Die erfindungsgemäße Optimierungsroutine kann vorzugsweise in den normalen Abfüllbetrieb integriert werden. In vorteilhafter Weise kann die Abfüllanlage damit im Betrieb einmalig oder regelmäßig oder auch unregelmäßig die Wiederholbarkeit überprüfen und optimieren und somit stets die optimalen Parameter zur Ansteuerung des Füllstellenmessgeräts verwenden.

Beispielsweise kann das erfindungsgemäße Optimierungsverfahren immer dann durchgeführt werden, wenn eine Änderung eines Prozessparameters, wie beispielsweise der Mediumtemperatur, dem Mediendruck, der Viskosität des Mediums, der Leitfähigkeit des Mediums oder der Art des Mediums, vorliegt.

Ist das im Rahmen des erfindungsgemäßen Verfahrens verwendete Füllstellenmessgerät ein Durchflussmessgerät, so ist ein zu optimierender Parameter beispielsweise die Sensorabtastrate und/oder die Feldfrequenz und/oder der Overshoot, also die Überhöhung der Spannung an den Feldspulen in der Einschwingphase des Magnetfeldes, bei einem Magnetisch-induktiven Durchflussmessgerät. Der Füllstellenmesswert kann gemäß dieser Ausgestaltung der Volumendurchfluss des abzufüllenden Mediums sein.

Alternativ kann das im Rahmen des erfindungsgemäßen Verfahrens verwendete Füllstellenmessgerät auch ein Füllstandmessgerät sein. In diesem Fall ist ein zu optimierender Parameter beispielsweise die Radarfrequenz eines Radar-Füllstandmessgeräts .

Das Kontrollmessgerät ist beispielsweise als Waage ausgebildet. In diesem Fall kann das Kontrollmessgerät das Gewicht des abgefüllten Mediums kontrollieren. Ist das Füllstellenmessgerät als Durchflussmessgerät ausgebildet, so kann das Kontrollmessgerät auch als Füllstandmessgerät ausgebildet sein.

Die Recheneinheit kann in dem Füllstellenmessgerät selbst angeordnet sein oder als externe Recheneinheit ausgebildet sein, wobei die externe Recheneinheit optional auch mit weiteren Füllstellenmessgeräten verbunden sein kann. Die Recheneinheit kann auch teilweise in dem Füllstellenmessgerät selbst angeordnet sein und darüber hinaus eine zentrale Einheit, die auch zur Kommunikation mit weiteren Füllstellenmessgeräten ausgebildet ist, umfassen.

Die Recheneinheit steuert das Füllstellenmessgerät mit Parametern an und wertet ebenfalls sowohl die von dem Füllstellenmessgerät bestimmten Füllstellenmesswerte als auch die von dem Kontrollmessgerät bestimmten Kontrollmesswerte aus. Darüber hinaus variiert die Recheneinheit den wenigstens einen Parameter oder den Parametersatz zur Ansteuerung des Füllstellenmessgeräts.

Bei der Variation des Parameters oder des Parametersatzes orientiert sich die Recheneinheit an der Bewertung der Wiederholbarkeit dieses Parametersatzes. Wird die Wiederholbarkeit eines geänderten Parameters oder eines geänderten Parametersatzes als gut bewertet, so variiert die Recheneinheit den Parameter oder den Parametersatz in die gleiche Richtung. Wird die Wiederholbarkeit eines geänderten Parameters als schlecht bewertet, variiert die Recheneinheit den Parameter oder den Parametersatz in eine andere Richtung und/oder wechselt den zu variierenden Parameter oder Parametersatz.

Diese Optimierungsroutine wird vorzugsweise so lange durchgeführt, bis ein optimaler Parameter und/oder ein optimaler Parametersatz zur Ansteuerung des Füllstellenmessgeräts gefunden ist. Das Füllstellenmessgerät wird dann im Abfüllbetrieb mit diesem optimalen Parameter und/oder Parametersatz angesteuert. Ist der optimale Parameter und/oder optimale Parametersatz bereits nach der ersten oder der zweiten Abfüllroutine erreicht, steht das optimierte Füllstellenmessgerät besonders schnell für den Abfüllbetrieb zur Verfügung.

Wenn es heißt, dass das Füllstellenmessgerät die Abfüllung des Zielvolumens kontrolliert, so ist damit gemeint, dass sofern das Füllstellenmessgerät ein Durchflussmessgerät ist, das Durchflussmessgerät beispielsweise ein Signal zur Betätigung eines Ventils ausgibt, wenn es registriert hat, dass das Zielvolumen durch die von dem Füllstellenmessgerät überwachte Leitung geflossen ist.

Ist das Füllstellenmessgerät als Füllstandmessgerät ausgebildet, gibt das Füllstellenmessgerät beispielsweise ein Signal zur Betätigung eines Ventils aus, wenn es registriert hat, dass das abzufüllende Zielvolumen erreicht ist.

Vorzugsweise variiert die Recheneinheit erneut einen Parameter oder einen Parametersatz und bestimmt erneut die Wiederholbarkeit, sofern die Wiederholbarkeit als schlecht bewertet wird und/oder
die Recheneinheit vergleicht die zweite Wiederholbarkeit mit dem Grenzwert, wobei wenigstens ein Parameter oder ein Parametersatz erneut variiert wird und die Wiederholbarkeit erneut bestimmt und bewertet wird, sofern die zweite Wiederholbarkeit oberhalb des Grenzwerts liegt und/oder
die Wiederholbarkeit und der entsprechende Parameter oder Parametersatz zur Ansteuerung des Füllstellenmessgeräts werden als optimal bewertet, wenn der Wert der Wiederholbarkeit unterhalb des Grenzwerts liegt.

Der Grenzwert definiert damit eine optimale Ansteuerung des Füllstellenmessgeräts, also eine Ansteuerung, mit der eine besonders gute Wiederholbarkeit des Füllstellenmessgeräts gewährleistet werden kann.

Vorzugsweise wird der Grenzwert in Abhängigkeit von dem abzufüllenden Medium und/oder der Art des Füllstellenmessgeräts und/oder den vorliegenden Prozessbedingungen festgelegt.

Gemäß einer weiteren vorteilhaften Ausgestaltung des Verfahrens wird der wenigstens eine optimale Parameter oder der optimale Parametersatz zur Ansteuerung des Füllstellenmessgeräts während des Abfüllbetriebs verwendet.

Weiterhin ist es ebenfalls besonders vorteilhaft, wenn zur Durchführung der ersten Abfüllroutine zur Ansteuerung des Füllstellenmessgeräts ein Parameter oder ein Parametersatz verwendet wird, der als optimaler Parameter oder als optimaler Parametersatz für das abzufüllende ersten Medium in der Recheneinheit hinterlegt ist. Gemäß dieser Ausgestaltung kann mit dem erfindungsgemäßen Verfahren verifiziert werden, ob der als optimal hinterlegte Parameter oder der als optimal hinterlegte Parametersatz tatsächlich optimal ist, d.h. ob die mit diesem Parameter oder Parametersatz bestimmte Wiederholbarkeit unter dem Grenzwert liegt.

Alternativ ist gemäß einer nächsten Ausgestaltung ein weiterer Sensor zur Messung einer Eigenschaft des ersten Mediums vorhanden, wobei vor der ersten Abfüllroutine der Sensor die Eigenschaft des ersten Mediums bestimmt und wobei der wenigstens eine Parameter oder der Parametersatz zur Ansteuerung des Füllstellenmessgeräts zur Durchführung der ersten Abfüllroutine von der Recheneinheit in Abhängigkeit der gemessenen Eigenschaft des ersten Mediums gewählt wird.

Gemäß einer nächsten Ausgestaltung des Verfahrens ist das Füllstellenmessgerät mit einem zweiten Medium, beispielsweise mit Wasser, kalibriert, wobei das erste Medium und das zweite Medium verschieden sind, sodass zur Abfüllung des ersten Mediums das Füllstellenmessgerät zur Kontrolle des Zielvolumens einen Offset berücksichtigt, wobei der Offset in Abhängigkeit des ersten Mediums gewählt wird.

Ist das Füllstellenmessgerät als Durchflussmessgerät ausgebildet, so addiert das Durchflussmessgerät beispielsweise zu dem bestimmten Volumendurchfluss stets einen Offset hinzu oder es zieht von dem bestimmten Volumendurchfluss stets einen Offset ab.

Der zu berücksichtigende Offset kann ebenfalls im Rahmen der Optimierung der Wiederholbarkeit bestimmt werden. Ist die Wiederholbarkeit des Füllstellenmessgeräts ausreichend gut im Rahmen der Erfindung, also optimal, kann auch der Offset dadurch besonders genau bestimmt werden, dass das im Rahmen des Abfüllbetriebs abzufüllende Zielvolumen dem Füllstellenmessgerät als zu kontrollierendes Zielvolumen vorgegeben wird und dass anschließend durch das Kontrollmessgerät überprüft wird, inwieweit das tatsächlich abgefüllte Volumen von dem Zielvolumen abweicht. Die Abweichung wird als Offset von dem Füllstellenmessgerät aufaddiert, wenn das tatsächlich abgefüllte Volumen kleiner ist als das Zielvolumen oder die Abweichung wird als Offset von dem Füllstellenmessgerät abgezogen, wenn das tatsächlich abgefüllte Volumen größer ist als das Zielvolumen.

Ein so optimiertes Verfahren zum Betreiben des Füllstellenmessgeräts gewährleistet, dass das Füllstellenmessgerät sowohl eine besonders gute Wiederholbarkeit als auch eine besonders kleine Messabweichung aufweist.

Gemäß einer nächsten Ausgestaltung des Verfahrens weist die Abfüllanlage eine Mehrzahl Füllstellen und eine Mehrzahl Füllstellenmessgeräte auf, wobei wenigstens zwei Füllstellenmessgeräten ein Kontrollmessgerät zugeordnet ist,
und die wenigstens zwei Füllstellenmessgeräte führen eine eigene Optimierung der Wiederholbarkeit und damit eine Bestimmung eines optimalen Parameters oder eines optimalen Parametersatzes zur Ansteuerung der Füllstellenmessgeräte während des Abfüllbetriebs durch.

Vorzugsweise ist jedem der wenigstens zwei Füllstellenmessgeräte ein eigenes Kontrollmessgerät zugeordnet. Gemäß dieser Ausgestaltung können die Füllstellenmessgeräte gleichzeitig ihre Wiederholbarkeit optimieren.

Alternativ kann ein Kontrollmessgerät wenigstens zwei Füllstellenmessgeräten zugeordnet sein. Gemäß dieser Ausgestaltung werden die Parameter oder die Parametersätze zur Ansteuerung der Füllstellenmessgeräte nacheinander optimiert.

Gemäß einer weiteren Ausgestaltung des Verfahrens weist die Abfüllanlage eine Mehrzahl Füllstellen und eine Mehrzahl Füllstellenmessgeräte auf, wobei wenigstens zwei Füllstellenmessgeräten ein Kontrollmessgerät zugeordnet ist und wobei die Mehrzahl an Füllstellenmessgeräten miteinander kommunizieren können,
wobei ein Füllstellenmessgerät den anderen Füllstellenmessgeräten einen Parameter oder einen Parametersatz zur Ansteuerung mitteilt, dessen Wiederholbarkeit als gut bewertet wird, wobei die anderen Füllstellenmessgeräte diesen Parameter oder diesen Parametersatz im Rahmen ihrer Optimierung der Wiederholbarkeit nutzen und/oder
wobei ein Füllstellenmessgerät den anderen Füllstellenmessgeräten einen Parameter oder einen Parametersatz zur Ansteuerung mitteilt, dessen Wiederholbarkeit als schlecht bewertet wird, wobei die anderen Füllstellenmessgeräte diesen Parameter oder diesen Parametersatz im Rahmen ihrer Optimierung verwerfen.

Beispielsweise können die anderen Füllstellenmessgeräte den als gut bewerteten Parameter oder den als gut bewerteten Parametersatz als Startwert zur Durchführung einer eigenen Optimierung der Wiederholbarkeit nutzen.

Gemäß einer nächsten Ausgestaltung des Verfahrens weist die Abfüllanlage eine Mehrzahl Füllstellen und eine Mehrzahl Füllstellenmessgeräte auf, wobei nur einem ersten Füllstellenmessgerät ein Kontrollmessgerät zugeordnet ist und wobei das erste Füllstellenmessgerät den anderen Füllstellenmessgeräten den optimalen Parameter oder den optimalen Parametersatz zur Ansteuerung mitteilt, für den die Wiederholbarkeit unter dem festgelegten Grenzwert liegt, wobei die anderen Füllstellenmessgeräte mit diesem optimalen Parameter oder mit diesem optimalen Parametersatz während des Abfüllbetriebs betrieben werden.

Wird die Optimierung der Wiederholbarkeit nur an einer Füllstelle durchgeführt, so ist der Aufwand zur Optimierung der Wiederholbarkeit und damit zur Optimierung der Abfüllanlage während des Abfüllbetriebs besonders gering.

Gemäß einer nächsten Ausgestaltung des Verfahrens weist vor oder nach der Optimierung der Wiederholbarkeit die erste Abfüllroutine ein erstes Zielvolumen auf und die zweite Abfüllroutine weist ein zweites Zielvolumen auf, wobei das zweite Zielvolumen von dem ersten Zielvolumen abweicht, wobei die Abweichung größer ist als die Messabweichung des Füllstellenmessgeräts, und wobei eine Synchronisation des Füllstellenmessgeräts und des Kontrollmessgeräts durch die Recheneinheit bejaht wird, wenn sowohl das Füllstellenmessgerät als auch das Kontrollmessgerät im Rahmen der zweiten Abfüllroutine einen Messwert an die Recheneinheit weiterleiten, der mit dem zweiten Zielvolumen korreliert. Ein derartiges Verfahren wird vor oder nach dem erfindungsgemäßen Verfahren zur Optimierung der Wiederholbarkeit durchgeführt. Beispielsweise wird das Verfahren vor der Bestimmung der ersten Wiederholbarkeit oder nach der Bestimmung der optimalen Wiederholbarkeit durchgeführt. Mit dieser Ausgestaltung des Verfahrens kann sichergestellt werden, dass das Kontrollmessgerät das dem Kontrollmessgerät zugeordnete Füllstellenmessgerät kontrolliert.

Alternativ kann auch bereits die erste Abfüllroutine ein Zielvolumen aufweisen, das einer Überfüllung oder Unterfüllung des Behälters, in den das Zielvolumen abgefüllt wird, entspricht, wobei eine Synchronisation des Füllstellenmessgeräts und des Kontrollmessgeräts durch die Recheneinheit bejaht wird, wenn sowohl das Füllstellenmessgerät als auch das Kontrollmessgerät den Wert der Überfüllung oder der Unterfüllung an die Recheneinheit weiterleiten. Ein derartiges Verfahren kann vor oder nach dem erfindungsgemäßen Verfahren zur Optimierung der Wiederholbarkeit durchgeführt werden. Zudem kann das zuvor genannte Verfahren zur Synchronisation des Füllstellenmessgeräts und des Kontrollmessgeräts auch in das Optimierungsverfahren integriert werden. In diesem Fall entspricht das Zielvolumen einer Überfüllung oder einer Unterfüllung des Behälters.

Diese Ausgestaltung des Verfahrens gewährleistet dadurch, dass das Zielvolumen um einen Wert, der größer ist als die Messabweichung des Füllstellenmessgeräts von dem im Abfüllbetrieb abzufüllenden Zielvolumen, das auch während der Optimierung der Wiederholbarkeit üblicherweise verwendet wird, abweicht, dass das Kontrollmessgerät auch tatsächlich das zugehörige Füllstellenmessgerät überwacht.

Weichen die Messwerte des Füllstellenmessgeräts und des Kontrollmessgeräts voneinander ab, so ist das Kontrollmessgerät dem Füllstellenmessgerät nicht korrekt zugeordnet.

Wird zur Sicherstellung der richtigen Zuordnung eines Kontrollmessgeräts der Behälter überfüllt, so wird in vorteilhafter Weise kein Ausschuss produziert.

Gemäß einer zweiten Lehre der vorliegenden Erfindung wird die eingangs genannte Aufgabe durch eine eingangs beschriebene Abfüllanlage dadurch gelöst, dass
die Recheneinheit, das wenigstens eine Füllstellenmessgerät und das Kontrollmessgerät zur Durchführung eines der zuvor beschriebenen Verfahren ausgebildet sind.

Hinsichtlich der speziellen Ausgestaltungen der Abfüllanlage wird auf die obige Beschreibung der einzelnen Ausgestaltungen der Verfahren zum Betreiben der Abfüllanlage verwiesen.

Im Einzelnen gibt es nun eine Vielzahl von Möglichkeiten das Verfahren zum Betreiben einer Abfüllanlage und die Abfüllanlage auszugestalten und weiterzubilden. Dazu wird verwiesen auf die den unabhängigen Patentansprüchen nachgeordneten Patentansprüche sowie auf die nachfolgende Beschreibung von bevorzugten Ausführungsbeispielen zusammen mit der Zeichnung.

In der Zeichnung zeigen
- Fig. 1: ein Ausführungsbeispiel eines Verfahrens zum Betreiben einer Abfüllanlage,
- Fig. 2: ein weiteres Ausführungsbeispiel eines Verfahrens zum Betreiben einer Abfüllanlage,
- Fig. 3: ein weiteres Ausführungsbeispiel eines Verfahrens zum Betreiben einer Abfüllanlage,
- Fig. 4: ein weiteres Ausführungsbeispiel eines Verfahrens zum Betreiben einer Abfüllanlage,
- Fig. 5: ein weiteres Ausführungsbeispiel eines Verfahrens zum Betreiben einer Abfüllanlage,
- Fig. 6: ein Ausführungsbeispiel einer Abfüllanlage,
- Fig. 7: ein Ausführungsbeispiel einer Abfüllanlage und
- Fig. 8: ein weiteres Ausführungsbeispiel einer Abfüllanlage.

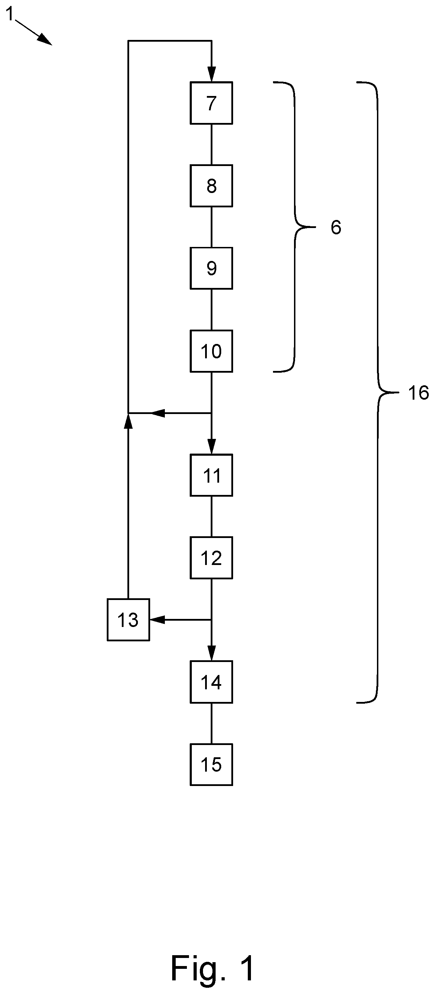

Fig. 1 zeigt ein Verfahren 1 zum Betreiben einer Abfüllanlage 2, wobei die Abfüllanlage 2 zum Abfüllen eines Zielvolumens eines ersten Mediums ausgebildet ist, wobei die Abfüllanlage 2 wenigstens ein Füllstellenmessgerät 3, wenigstens ein Kontrollmessgerät 4 und wenigstens eine Recheneinheit 5 aufweist.

Das Füllstellenmessgerät 3 kontrolliert im Betrieb die Abfüllung des Zielvolumens. Im dargestellten Ausführungsbeispiel ist das Füllstellenmessgerät 3 als Durchflussmessgerät ausgebildet.

Das Kontrollmessgerät 4 ist als Füllstandmessgerät ausgebildet und derart in der Abfüllanlage 2 angeordnet, dass es das von dem Füllstellenmessgerät 3 kontrollierte Zielvolumen des abzufüllenden Mediums erfasst. Weiterhin sind das Füllstellenmessgerät 3 und das Kontrollmessgerät 4 mit der Recheneinheit 5 verbunden.

In einem ersten Teil des erfindungsgemäßen Verfahrens wird eine Abfüllroutine 6 durchgeführt, die folgende Schritte umfasst:
- Abfüllen 7 eines Zielvolumens unter Kontrolle des Füllstellenmessgeräts 3,
- Weiterleiten 8 eines Füllstellenmesswerts des Füllstellenmessgeräts, wobei der Füllstellenmesswert mit dem Zielvolumen korreliert, an die Recheneinheit oder Vorliegen eines Füllstellenmesswerts des Füllstellenmessgeräts, wobei der erste Messwert mit dem Zielvolumen korreliert, in der Recheneinheit,
- Erfassung 9 des abgefüllten Zielvolumens durch das Kontrollmessgerät 4,
- Weiterleiten 10 eines Kontrollmesswerts des Kontrollmessgeräts an die Recheneinheit, wobei der Kontrollmesswert mit dem Zielvolumen korreliert.

Anschließend wird wenigstens eine zweite Abfüllroutine 6, vorzugsweise eine Vielzahl von Abfüllroutinen 6, durchgeführt, sodass in der Recheneinheit 5 wenigstens zwei Füllstellenmesswerte des Füllstellenmessgeräts 3 und wenigstens zwei entsprechende Kontrollmesswerte 4 vorliegen, vorzugsweise wobei in der Recheneinheit 5 eine Vielzahl von Füllstellenmesswerten des Füllstellenmessgeräts 3 und eine Vielzahl von entsprechenden Kontrollmesswerten vorliegt.

Aus den Füllstellenmesswerten des Füllstellenmessgeräts 3 und den Kontrollmesswerten wird eine erste Wiederholbarkeit des Füllstellenmessgeräts 3 durch die Recheneinheit 5 bestimmt 11 und ausgewertet 12.

Sofern die erste Wiederholbarkeit oberhalb von einem festgelegten Grenzwert liegt, variiert 13 die Recheneinheit 5 zumindest einen Parameter oder einen Parametersatz zur Ansteuerung des Füllstellenmessgeräts 3.

Anschließend werden wenigstens zwei weitere Abfüllroutinen 6 durchgeführt, wobei das Füllstellenmessgerät 3 mit dem wenigstens einen geänderten Parameter angesteuert wird und eine zweite Wiederholbarkeit wird bestimmt 11.

In einem nächsten Schritt wird die zweite Wiederholbarkeit durch die Recheneinheit bewertet 12.

Die zweite Wiederholbarkeit wird als gut bewertet, wenn der Wert der zweiten Wiederholbarkeit kleiner ist als der Wert der ersten Wiederholbarkeit. Die zweite Wiederholbarkeit wird als schlecht bewertet, wenn der Wert der zweiten Wiederholbarkeit größer ist als der Wert der ersten Wiederholbarkeit.

Es wird weiterhin eine Mehrzahl an Abfüllroutinen mit einer Bestimmung der Wiederholbarkeit durchgeführt und zwar so lange, bis die bestimmte Wiederholbarkeit unter einem festgelegten Grenzwert liegt.

Der wenigstens eine Parameter oder der Parametersatz zur Ansteuerung des Füllstellenmessgeräts, der mit der Wiederholbarkeit korreliert, die unter dem festgelegten Grenzwert liegt, wird zur Ansteuerung des Füllstellenmessgeräts während des Abfüllbetriebs 19 verwendet 14.

Durch die Optimierung der Wiederholbarkeit kann also sichergestellt werden, dass das Füllstellenmessgerät 3 für die vorliegenden Prozessbedingungen derart optimal betrieben wird, dass das Füllstellenmessgerät 3 besonders wiederholbare Messwerte ausgibt.

Ist das Füllstellenmessgerät 3 mit einem zweiten Medium kalibriert, so ist beim regulären Abfüllbetrieb 19 ein Offset auf die bestimmten Füllstellenmesswerte aufzuaddieren oder von den bestimmten Füllstellenmesswerten abzuziehen. Mit Hilfe des mittels des Kontrollmessgeräts bestimmten Zielvolumens kann der Offset zum Zielvolumen dann besonders genau bestimmt werden 15, wenn die Wiederholbarkeit besonders klein ist.

Das dargestellte Verfahren 1 weist insofern den Vorteil auf, dass einerseits die Wiederholbarkeit des Füllstellenmessgeräts im Rahmen der vorliegenden Prozessbedingungen optimiert ist und durch eine besonders genaue Bestimmung des zu berücksichtigenden Offsets zur Kontrolle des abzufüllenden Mediums auch insgesamt die Messabweichung des Füllstellenmessgeräts verbessert ist.

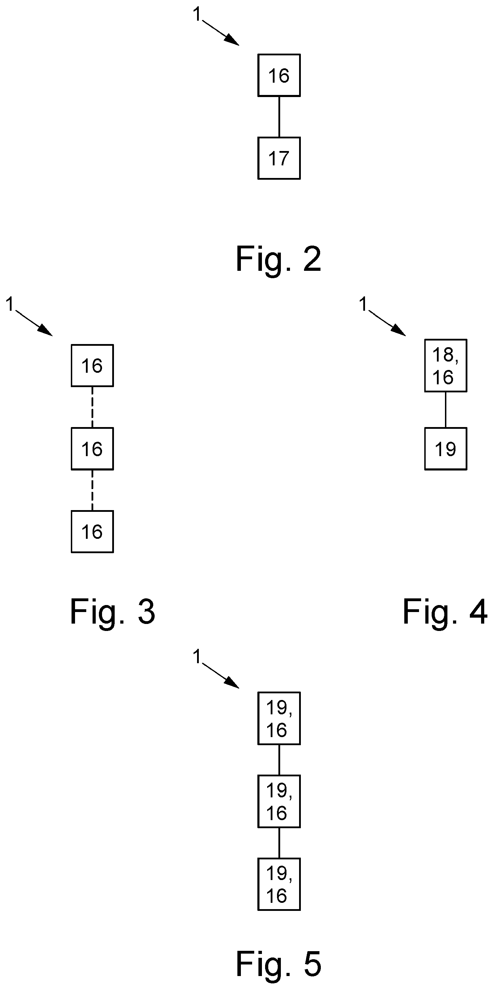

In Fig. 2 ist ein weiteres Ausführungsbeispiel eines erfindungsgemäßen Verfahrens 1 dargestellt. Im dargestellten Ausführungsbeispiel sind eine Mehrzahl an Füllstellenmessgeräten 3 vorhanden. Die Mehrzahl an Füllstellenmessgeräten 3 können entweder direkt miteinander kommunizieren oder es ist eine zentrale Recheneinheit 5 vorhanden, die mit allen Füllstellenmessgeräten 3 kommunizieren kann.

In einem ersten Schritt des Verfahren wird an einem ersten Füllstellenmessgerät die in Fig. 1 beschriebene Routine 16 zur Optimierung der Wiederholbarkeit und insofern zur Optimierung der Parameter zur Ansteuerung des Füllstellenmessgeräts durchgeführt.

Anschließend teilt das Füllstellenmessgerät 3 diese optimierten Parameter den übrigen Füllstellenmessgeräten 3 unmittelbar oder über die zentrale Recheneinheit 5 mit 17, damit auch die übrigen Füllstellenmessgeräte 3 mit den optimierten Parametern betrieben werden.

Gemäß dieser Ausgestaltung des Verfahrens 1 wird die Vielzahl an Füllstellenmessgeräte 3 mit den gleichen Parametern zur Ansteuerung der Füllstellenmessgeräte 3 betrieben.

Dieses Verfahren 1 weist den Vorteil auf, dass die Abfüllanlage 2 mit geringem Aufwand an einer Vielzahl von Füllstellen, insbesondere an allen Füllstellen, optimiert werden kann.

In Fig. 3 ist ein weiteres Ausführungsbeispiel eines erfindungsgemäßen Verfahrens 1 dargestellt. Auch in dem in Fig. 3 dargestellten Verfahren 1 weist die Abfüllanlage 2 eine Mehrzahl Füllstellen auf.

Im Unterschied zu dem in Fig. 2 dargestellten Verfahren wird die in Fig. 1 beschriebene Routine 16 zur Optimierung der Wiederholbarkeit bzw. zur Optimierung der Parameter zur Ansteuerung des Füllstellenmessgeräts 3 an den einzelnen Füllstellen separat durchgeführt.

Dazu ist der Vielzahl an Füllstellenmessgeräten 3 jeweils ein eigenes Kontrollmessgerät 4 zugeordnet, oder es ist ein Kontrollmessgerät 4 vorhanden, dass der Vielzahl an Füllstellenmessgeräten 3 zugeordnet ist. Gemäß der letzten Alternative wird die Optimierung der Wiederholbarkeit an den einzelnen Füllstellen zeitlich nacheinander durchgeführt.

Die einzelnen Füllstellenmessgeräte 3 werden gemäß diesem Ausführungsbeispiel mit Parametern betrieben, die für die jeweilige Füllstelle als optimal bewertet wurden. Insofern können die einzelnen Füllstellenmessgeräte 3 durchaus mit unterschiedlichen Parametern betrieben werden.

Fig. 4 zeigt ein nächstes Ausführungsbeispiel des erfindungsgemäßen Verfahrens 1. In einem ersten Schritt wird an einem Füllstellenmessgerät 3 in einer Einlernphase 18 die in Fig. 1 dargestellte Optimierungsroutine 16 durchgeführt, so lange bis die optimalen Parameter zur Ansteuerung des Füllstellenmessgeräts gefunden sind.

Anschließend wird das Füllstellenmessgerät im regulären Abfüllbetrieb 19 mit den optimalen Parametern angesteuert, ohne dass laufend oder auch regelmäßig eine weitere Überprüfung oder erneute Optimierung der Wiederholbarkeit durchgeführt wird. Für den regulären Abfüllbetrieb 19 wird das Kontrollmessgerät im dargestellten Ausführungsbeispiel nicht mehr benötigt.

Eine erneute Einlernphase 18 kann vor einem erneuten Abfüllbetrieb 19 durchgeführt werden, also beispielsweise wenn die Abfüllanlage 2 gereinigt worden ist oder ein neues Medium abgefüllt wird.

Fig. 5 zeigt ein weiteres Ausführungsbeispiel eines erfindungsgemäßen Verfahrens 1. Gemäß dem dargestellten Ausführungsbeispiel ist die Optimierungsroutine 16 zur Optimierung der Wiederholbarkeit bzw. zur Optimierung der Parameter zur Ansteuerung des Füllstellenmessgeräts in den regulären Abfüllbetrieb 19 integriert.

Insofern entspricht das Zielvolumen in der Optimierungsroutine dem Abfüllvolumen während des regulären Abfüllprozesses. In regelmäßigen oder unregelmäßigen Abständen kontrolliert das Kontrollmessgerät 4 das abgefüllte Zielvolumen und es wird gemäß dem in Fig. 1 beschriebenen Verfahren 1 erneut eine optimale Wiederholbarkeit bestimmt. Weichen die Parameter zur Ansteuerung des Füllstellenmessgeräts 3 von den aktuell verwendeten Parametern ab, so werden in der nächsten Abfüllphase die neu bestimmten Parameter zur Ansteuerung des Füllstellenmessgeräts 3 verwendet.

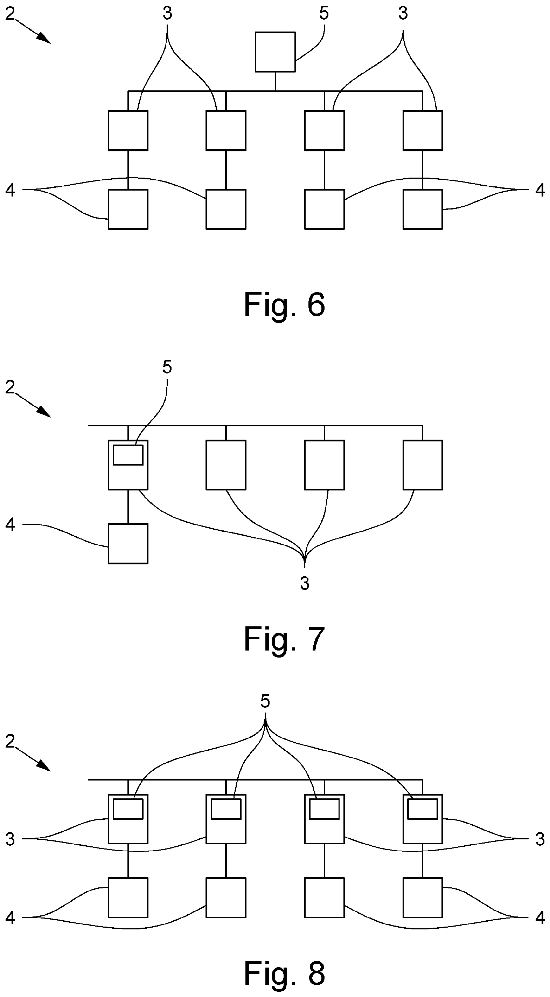

Fig. 6 zeigt schematisch ein Ausführungsbeispiel einer Abfüllanlage 2 zum Abfüllen eines Zielvolumens eines ersten Mediums, wobei die Abfüllanlage 2 eine Vielzahl an Füllstellenmessgeräten 3 und eine Vielzahl von Kontrollmessgeräten 4 aufweist. Jedem Füllstellenmessgerät 3 ist ein Kontrollmessgerät 4 zugeordnet, wobei jedes Kontrollmessgerät 4 das von dem Füllstellenmessgerät 3 abgefüllte Zielvolumen überprüfen kann.

Weiterhin ist zentrale Recheneinheit 5 vorhanden, die mit den einzelnen Füllstellenmessgeräten 3 kommunizieren kann.

An den einzelnen Füllstellen kann die Wiederholbarkeit und können damit die Parameter zur Ansteuerung der Füllstellenmessgeräte separat optimiert werden. Hierzu weist jedes Füllstellenmessgerät neben der zentralen Recheneinheit auch eine eigene Recheneinheit auf. Dies kann entweder vor dem regulären Abfüllbetrieb 19 in einer Einlernphase oder auch in regelmäßigen oder unregelmäßigen Abständen während des regulären Abfüllbetriebs erfolgen.

Sofern an einer Füllstelle die Wiederholbarkeit als gut oder auch als optimal bewertet wird, kann das Füllstellenmessgerät 3 diese Information und/oder die entsprechenden Parameter zur Ansteuerung des Füllstellenmessgeräts 3 der zentralen Recheneinheit 5 mitteilen, damit diese die als gut oder optimal bewerteten Parameter zur Ansteuerung des Füllstellenmessgeräts 3 den übrigen Füllstellenmessgeräten 3 mitteilt. Die übrigen Füllstellenmessgeräte 3 nutzen diese Information bei der eigenen Optimierungsroutine.

Ebenso kann ein Füllstellenmessgerät 3 der zentralen Recheneinheit 5 mitteilen, wenn eine Wiederholbarkeit als schlecht bewertet wird, was ebenso dadurch von den übrigen Füllstellenmessgeräten 3 dadurch genutzt werden kann, dass die Füllstellenmessgeräte 3 diese Parameter zur Ansteuerung während ihrer Optimierungsroutine 16 verwerfen.

Fig. 7 zeigt ein weiteres Ausführungsbeispiel einer Abfüllanlage 2 mit einer Mehrzahl an Füllstellenmessgeräten 3, wobei jedoch nur ein Kontrollmessgerät 4 vorhanden ist, das einem Füllstellenmessgerät 3 zugeordnet ist. Dieses Füllstellenmessgerät 3 weist auch eine Recheneinheit 5 zur Durchführung der Optimierungsroutine 16 zur Optimierung der Wiederholbarkeit auf.

An der Füllstelle, an der das Kontrollmessgerät 4 angeordnet ist, wird die Optimierungsroutine 16 durchgeführt. Liegt die Wiederholbarkeit unter einem festgelegten Grenzwert, so teilt das Füllstellenmessgerät 3 den übrigen Füllstellenmessgeräten 3 die optimalen Parameter zur Ansteuerung der Füllstellenmessgeräte 3 mit.

Während des Betriebs kann das eine Füllstellenmessgerät 3 in regelmäßigen oder unregelmäßigen Abständen oder bei Änderung eines Prozessparameters erneut die Optimierungsroutine 16 umfassend die Variation der Parameter zur Ansteuerung des Füllstellenmessgeräts 3 durchführen, sodass stets garantiert werden kann, dass die Abfüllanlage 2 bzw. die einzelnen Füllstellenmessgeräte 3 mit optimalen Parametern betrieben werden.

Fig. 8 zeigt ein weiteres Ausführungsbeispiel einer Abfüllanlage 2 mit einer Vielzahl an Füllstellenmessgeräten 3, wobei jedem Füllstellenmessgerät 3 ein Kontrollmessgerät 4 zugeordnet ist und wobei jedes Füllstellenmessgerät 3 eine Recheneinheit 5 aufweist, die zur Durchführung der erfindungsgemäßen Optimierungsroutine 16 zur Optimierung der Wiederholbarkeit des jeweiligen Füllstellenmessgeräts 3 ausgebildet ist.

Gemäß dieser Ausgestaltung kann die Wiederholbarkeit an jeder Füllstelle separat optimiert werden und zwar entweder zeitlich versetzt oder auch zeitgleich. Insofern können die Füllstellenmessgeräte 3 auch mit unterschiedlichen Parametern angesteuert werden, sodass sichergestellt werden kann, dass die Füllstellenmessgeräte 3 für die für sie relevante Füllstelle optimiert sind.

### Bezugszeichen

- 1: Verfahren zum Betreiben einer Abfüllanlage
- 2: Abfüllanlage
- 3: Füllstellenmessgerät
- 4: Kontrollmessgerät
- 5: Recheneinheit
- 6: Abfüllroutine
- 7: Abfüllen eines Zielvolumens
- 8: Weiterleiten eines ersten Messwerts des Füllstellenmessgeräts
- 9: Erfassung des abgefüllten Zielvolumens durch das Kontrollmessgerät
- 10: Weiterleiten eines Kontrollmesswerts des Kontrollmessgeräts an die Recheneinheit
- 11: Bestimmung einer ersten Wiederholbarkeit
- 12: Auswertung der Wiederholbarkeit
- 13: Variation eines Parameters zur Ansteuerung des Füllstellenmessgeräts
- 14: Verwendung der optimalen Parameter zur Ansteuerung des Füllstellenmessgeräts
- 15: Bestimmung eines Offsets
- 16: Routine zur Optimierung der Wiederholbarkeit
- 17: Mitteilung der optimierten Parameter an weitere Füllstellenmessgeräte
- 18: Einlernphase
- 19: regulärer Abfüllbetrieb

## Patentansprüche

1. Verfahren (1) zum Betreiben einer Abfüllanlage (2) zum Abfüllen eines Zielvolumens eines ersten Mediums, wobei die Abfüllanlage (2) wenigstens ein Füllstellenmessgerät (3), wenigstens ein Kontrollmessgerät (4) und wenigstens eine Recheneinheit (5) aufweist,
wobei das Füllstellenmessgerät (3) die Abfüllung des Zielvolumens kontrolliert,
wobei das Kontrollmessgerät (4) derart in der Abfüllanlage (2) angeordnet ist, dass es das von dem Füllstellenmessgerät (3) kontrollierte Zielvolumen des abzufüllenden Mediums erfasst, und
wobei das Füllstellenmessgerät (3) und das Kontrollmessgerät (4) mit der Recheneinheit (5) verbunden sind,
wobei das Verfahren (1) die folgenden Schritte aufweist:
- Durchführen einer ersten Abfüllroutine (6), wobei die Abfüllroutine (6) die folgenden Verfahrensschritte umfasst:
- Abfüllen (7) eines Zielvolumens unter Kontrolle des Füllstellenmessgeräts (3),
- Weiterleiten (8) eines Füllstellenmesswerts des Füllstellenmessgeräts (3), wobei der Füllstellenmesswert mit dem Zielvolumen korreliert, an die Recheneinheit (5) oder Vorliegen eines Füllstellenmesswerts des Füllstellenmessgeräts (3), wobei der Füllstellenmesswert mit dem Zielvolumen korreliert, in der Recheneinheit (5),
- Erfassung (9) des abgefüllten Zielvolumens durch das Kontrollmessgerät (4),
- Weiterleiten (10) eines Kontrollmesswerts des Kontrollmessgeräts (4) an die Recheneinheit (5), wobei der Kontrollmesswert mit dem Zielvolumen korreliert,
- Durchführen von wenigstens einer zweiten Abfüllroutine (6), vorzugsweise Durchführung von einer Vielzahl von Abfüllroutinen (6), sodass in der Recheneinheit (5) wenigstens zwei Füllstellenmesswerte des Füllstellenmessgeräts (3) und wenigstens zwei entsprechende Kontrollmesswerte vorliegen, vorzugsweise wobei in der Recheneinheit (5) eine Vielzahl von Füllstellenmesswerten des Füllstellenmessgeräts (3) und eine Vielzahl von entsprechenden Kontrollmesswerten vorliegt,
**dadurch gekennzeichnet, dass** das Verfahren die folgenden weiteren Schritte aufweist:
- Bestimmung (11) einer ersten Wiederholbarkeit des Füllstellenmessgeräts (11) durch die Recheneinheit aus den Füllstellenmesswerten des Füllstellenmessgeräts und den Kontrollmesswerten und Bewertung (12) der ersten Wiederholbarkeit,
- sofern die erste Wiederholbarkeit oberhalb von einem festgelegten Grenzwert liegt:
- Variation (13) von zumindest einem Parameter oder von einem Parametersatz zur Ansteuerung des Füllstellenmessgeräts und
- Durchführung von wenigstens zwei weiteren Abfüllroutinen (6), wobei das Füllstellenmessgerät mit dem wenigstens einen geänderten Parameter oder dem geänderten Parametersatz angesteuert wird und Bestimmung einer zweiten Wiederholbarkeit,
- Bewertung (12) der zweiten Wiederholbarkeit durch die Recheneinheit (5) als gut, wenn der Wert der zweiten Wiederholbarkeit kleiner ist als der Wert der ersten Wiederholbarkeit oder Bewertung der zweiten Wiederholbarkeit durch die Recheneinheit (5) als schlecht, wenn der Wert der zweiten Wiederholbarkeit größer ist als der Wert der ersten Wiederholbarkeit.

2. Verfahren nach Anspruch 1, **dadurch gekennzeichnet, dass** die Recheneinheit erneut einen Parameter oder einen Parametersatz variiert und erneut die Wiederholbarkeit bestimmt, sofern die Wiederholbarkeit als schlecht bewertet wird und/oder
dass die zweite Wiederholbarkeit mit dem Grenzwert verglichen wird und wenigstens ein Parameter oder ein Parametersatzes erneut variiert wird und dass die Wiederholbarkeit erneut bestimmt und bewertet wird, sofern die zweite Wiederholbarkeit oberhalb des Grenzwerts liegt und/oder
dass die Wiederholbarkeit und der entsprechende Parameter oder Parametersatz zur Ansteuerung des Füllstellenmessgeräts als optimal bewertet wird, wenn der Wert derWiederholbarkeit unterhalb des Grenzwerts liegt.

3. Verfahren (1) nach Anspruch 1 oder 2, **dadurch gekennzeichnet, dass** der wenigstens eine optimale Parameter oder der optimale Parametersatz zur Ansteuerung des Füllstellenmessgeräts (3) während des Abfüllbetriebs (19) verwendet wird.

4. Verfahren (1) nach einem der Ansprüche 1 bis 3, **dadurch gekennzeichnet, dass** zur Durchführung der ersten Abfüllroutine (6) zur Ansteuerung des Füllstellenmessgeräts (3) ein Parameter oder ein Parametersatz verwendet wird, der als optimaler Parameter oder als optimaler Parametersatz für das abzufüllende erste Medium in der Recheneinheit (5) hinterlegt ist.

5. Verfahren (1) nach einem der Ansprüche 1 bis 3, **dadurch gekennzeichnet, dass** ein weiterer Sensor zur Messung einer Eigenschaft des ersten Mediums vorhanden ist, und dass vor der ersten Abfüllroutine (6) der Sensor die Eigenschaft des ersten Mediums bestimmt und dass der wenigstens eine Parameter oder der Parametersatz zur Ansteuerung des Füllstellenmessgerät (3) zur Durchführung der ersten Abfüllroutine (6) von der Recheneinheit (5) in Abhängigkeit der gemessenen Eigenschaft des ersten Mediums gewählt wird.

6. Verfahren (1) nach einem der Ansprüche 1 bis 5, **dadurch gekennzeichnet, dass** das Füllstellenmessgerät (3) mit einem zweiten Medium kalibriert ist, wobei das erste Medium und das zweite Medium verschieden sind, und dass bei Abfüllung des ersten Mediums das Füllstellenmessgerät (3) zur Kontrolle des Zielvolumens einen Offset berücksichtigt, wobei der Offset in Abhängigkeit des ersten Mediums gewählt wird.

7. Verfahren (1) nach einem der Ansprüche 1 bis 6, **dadurch gekennzeichnet, dass** die Abfüllanlage (2) eine Mehrzahl Füllstellen und eine Mehrzahl Füllstellenmessgeräte (3) umfasst, wobei wenigstens zwei Füllstellenmessgeräten (3) ein Kontrollmessgerät (4) zugeordnet ist,
und dass die wenigstens zwei Füllstellenmessgeräte (3) eine eigene Optimierung der Wiederholbarkeit und damit eine Bestimmung eines optimalen Parameters oder eines optimalen Parametersatzes zur Ansteuerung der Füllstellenmessgeräte (3) während des Abfüllbetriebs (19) durchführen.

8. Verfahren (1) nach einem der Ansprüche 1 bis 6, **dadurch gekennzeichnet, dass** die Abfüllanlage (2) eine Mehrzahl Füllstellen und eine Mehrzahl Füllstellenmessgeräte (3) umfasst, wobei wenigstens zwei Füllstellenmessgeräten (3) ein Kontrollmessgerät (4) zugeordnet ist und wobei die Mehrzahl an Füllstellenmessgeräten (3) miteinander kommunizieren können, dass ein Füllstellenmessgerät (3) den anderen Füllstellenmessgeräten (3) einen Parameter oder einen Parametersatz zur Ansteuerung mitteilt, dessen Wiederholbarkeit als gut bewertet wird, wobei die anderen Füllstellenmessgeräte (3) diesen Parameter oder diesen Parametersatz im Rahmen ihrer Optimierung der Wiederholbarkeit nutzen und/oder
dass ein Füllstellenmessgerät (3) den anderen Füllstellenmessgeräten (3) einen Parameter oder einen Parametersatz zur Ansteuerung mitteilt, dessen Wiederholbarkeit als schlecht bewertet wird, wobei die anderen Füllstellenmessgeräte (3) diesen Parameter oder diesen Parametersatz im Rahmen ihrer Optimierung verwerfen.

9. Verfahren (1) nach einem der Ansprüche 1 bis 6, **dadurch gekennzeichnet, dass** die Abfüllanlage (2) eine Mehrzahl Füllstellen und eine Mehrzahl Füllstellenmessgeräte (3) umfasst, wobei nur einem ersten Füllstellenmessgerät (3) ein Kontrollmessgerät (4) zugeordnet ist und dass das erste Füllstellenmessgerät (3) den anderen Füllstellenmessgeräten (3) den optimalen Parameter oder den optimalen Parametersatz zur Ansteuerung mitteilt, für den die Wiederholbarkeit unter dem festgelegten Grenzwert liegt, wobei die anderen Füllstellenmessgeräte (3) mit diesem optimalen Parameter oder mit diesem optimalen Parametersatz während des Abfüllbetriebs (19) betrieben werden.

10. Verfahren (1) nach einem der Ansprüche 1 bis 9, **dadurch gekennzeichnet, dass** vor oder nach der Optimierung der Wiederholbarkeit die erste Abfüllroutine (6) ein erstes Zielvolumen aufweist und die zweite Abfüllroutine (6) ein zweites Zielvolumen aufweist, wobei das zweite Zielvolumen von dem ersten Zielvolumen abweicht, wobei die Abweichung größer ist als die Messabweichung des Füllstellenmessgeräts (3), und dass eine Synchronisation des Füllstellenmessgeräts (3) und des Kontrollmessgeräts (4) durch die Recheneinheit (5) bejaht wird, wenn sowohl das Füllstellenmessgerät (3) als auch das Kontrollmessgerät (4) im Rahmen der zweiten Abfüllroutine einen Messwert an die Recheneinheit (5) weiterleiten, der mit dem zweiten Zielvolumen korreliert.

11. Abfüllanlage (2) zum Abfüllen eines Zielvolumens eines ersten Mediums, wobei die Abfüllanlage (2) wenigstens ein Füllstellenmessgerät (3), wenigstens ein Kontrollmessgerät (4) und wenigstens eine Recheneinheit (5) aufweist,
wobei das Füllstellenmessgerät (3) die Abfüllung des Zielvolumens kontrolliert,
wobei das Kontrollmessgerät (4) derart in der Abfüllanlage (2) angeordnet ist, dass es das von dem Füllstellenmessgerät (3) kontrollierte Zielvolumen des abzufüllenden Mediums erfasst, und
wobei das Füllstellenmessgerät (3) und das Kontrollmessgerät (4) mit der Recheneinheit (5) verbunden sind,
**dadurch gekennzeichnet, dass**
die Recheneinheit (5), das wenigstens eine Füllstellenmessgerät (3) und das Kontrollmessgerät (4) zur Durchführung eines Verfahrens (1) nach einem der Ansprüche 1 bis 10 ausgebildet sind.

## Claims

1. Method (1) for operating a filling system (2) for filling a target volume of a first medium, wherein the filling system (2) comprises at least one filling point measuring device (3), at least one control measuring device (4), and at least one computing unit (5),
wherein the filling point measuring device (3) contols the filling of the target volume,
wherein the control measuring device (4) is arranged in the filling system (2) in such a way that it captures the target volume of the medium to be filled, as controlled by the filling point measuring device (3), and
wherein the filling point measuring device (3) and the control measuring device (4) are connected to the computing unit (5),
wherein the method (1) comprises the following steps:
- Performing an initial filling routine (6), wherein the filling routine (6) comprises the following method steps:
- Filling (7) a target volume under the control of the filling point measuring device (3),
- Forwarding (8) a filling point measurement value from the filling point measuring device (3), wherein the filling point measurement value correlates with the target volume, to the computing unit (5), or detecting the presence of a filling point measurement value from the filling point measuring device (3) in the computing unit (5), wherein the filling point measurement value correlates with the target volume,
- Detecting (9) of the filled target volume by the control measuring device (4),
- Forwarding (10) a control measurement value from the control measuring device (4) to the computing unit (5), wherein the control measurement value correlates with the target volume,
- Performing at least a second filling routine (6), preferably performing a plurality of filling routines (6), so that the computing unit (5) contains at least two filling point measurement values from the filling point measuring device (3) and at least two corresponding control measurement values, preferably wherein the computing unit (5) contains a plurality of filling point measurement values from the filling point measuring device (3) and a plurality of corresponding control measurement values,
**characterized in**
**that** the method comprises the following additional steps:
- Determining (11) - by the computing unit - a first repeatability of the filling point measuring device (11) based on the filling point measurement values from the filling point measuring device and the control measurement values, and evaluating (12) the first repeatability,
- if the first repeatability value exceeds a specified threshold value:
- Variating (13) of at least one parameter or a set of parameters for controlling the filling point measuring device, and
- Performing at least two additional filling routines (6), wherein the filling point measuring device is controlled using the at least one modified parameter or the modified set of parameters, and determining a second repeatability,
- Evaluating - by the computing unit (5) - the second repeatability (12) as "good" if the value of the second repeatability is less than the value of the first repeatability, or evaluating - by the computing unit (5) - the second repeatability as "poor" if the value of the second repeatability is greater than the value of the first repeatability.

2. Method according to claim 1, **characterized in that** the computing unit again varies a parameter or a set of parameters and again determines the repeatability, provided that the repeatability is assessed as poor and/or
that the second repeatability is compared with the threshold value, and at least one parameter or set of parameters is varied again, and that the repeatability is determined and evaluated again if the second repeatability exceeds the threshold value and/or
that the repeatability and the corresponding parameter or set of parameters used to control the filling point measuring device are considered optimal if the repeatability value is below the threshold value.

3. Method (1) according to claim 1 or 2, **characterized in that** the at least one optimal parameter or the optimal set of parameters is used to control the filling point measuring device (3) during the filling operation (19).

4. Method (1) according to any one of claims 1 to 3, **characterized in that**, in order to carry out the first filling routine (6), a parameter or a set of parameters that is stored in the computing unit (5) as the optimal parameter or optimal set of parameters for the first medium to be filled is used for controlling the filling point measuring device (3).

5. Method (1) according to any one of claims 1 to 3, **characterized in that** a further sensor for measuring a property of the first medium is provided, and that, prior to the first filling routine (6), the sensor determines the property of the first medium, and that the at least one parameter or set of parameters for controlling the filling point measuring device (3) to perform the first filling routine (6) is selected by the computing unit (5) in dependence on the measured property of the first medium.

6. Method (1) according to any one of claims 1 to 5, **characterized in that** the filling point measuring device (3) is calibrated with a second medium, wherein the first medium and the second medium are different, and that, when filling with the first medium, the filling point measuring device (3) takes an offset into account to control the target volume, wherein the offset is selected in dependence on the first medium.

7. Method (1) according to any one of claims 1 to 6, **characterized in that** the filling system (2) comprises a plurality of filling points and a plurality of filling point measuring devices (3), wherein at least two filling point measuring devices (3) are assigned to a control measuring device (4),
and that the at least two filling point measuring devices (3) perform their own optimization of repeatability and, thereby, determine an optimal parameter or a set of optimal parameters for controlling the filling point measuring devices (3) during the filling operation (19).

8. Method (1) according to any one of claims 1 to 6, **characterized in that** the filling system (2) comprises a plurality of filling points and a plurality of filling point measuring devices (3), wherein at least two filling point measuring devices (3) are assigned to a control measuring device (4), and wherein the plurality of filling point measuring devices (3) can communicate with one another,
that a filling point measuring device (3) communicates to the other filling point measuring devices (3) a parameter or a set of parameters for control, the repeatability of which is rated as good, wherein the other filling point measuring devices (3) use this parameter or this set of parameters as part of their optimization of repeatability and/or
that a filling point measuring device (3) communicates to the other filling point measuring devices (3) a parameter or a set of parameters for control, the repeatability of which is rated as poor, wherein the other filling point measuring devices (3) discard this parameter or set of parameters as part of their optimization process.

9. Method (1) according to any one of claims 1 to 6, **characterized in that** the filling system (2) comprises a plurality of filling points and a plurality of filling point measuring devices (3), wherein a control measuring device (4) is assigned only to a first filling point measuring device (3), and that the first filling point measuring device (3) communicates to the other filling point measuring devices (3) the optimal parameter or set of parameters for control, for which the repeatability is below the specified threshold value, wherein the other filling point measuring devices (3) are operated using this optimal parameter or set of parameters during the filling operation (19).

10. Method (1) according to any one of claims 1 to 9, **characterized in that**, before or after the optimization of repeatability, the first filling routine (6) has a first target volume and the second filling routine (6) has a second target volume, wherein the second target volume differs from the first target volume, wherein the difference is greater than the measurement error of the filling point measuring device (3), and that synchronization of the filling point measuring device (3) and the control measuring device (4) is approved by the computing unit (5) if both the filling point measuring device (3) and the control measuring device (4) transmit a measured value to the computing unit (5) as part of the second filling routine, which value correlates with the second target volume.

11. Filling system (2) for filling a target volume of a first medium, wherein the filling system (2) comprises at least one filling point measuring device (3), at least one control measuring device (4), and at least one computing unit (5), wherein the filling point measuring device (3) controls the filling of the target volume,
wherein the control measuring device (4) is arranged in the filling system (2) in such a way that it captures the target volume of the medium to be filled, as controlled by the filling point measuring device (3), and
wherein the filling point measuring device (3) and the control measuring device (4) are connected to the computing unit (5),
**characterized in**
**that** the computing unit (5), the at least one filling point measuring device (3),
and the control measuring device (4) are configured to carry out a method (1) according to any one of claims 1 to 10.

## Revendications

1. Procédé (1) pour faire fonctionner une installation de remplissage (2) destinée à remplir un volume cible d'un premier fluide, l'installation de remplissage (2) possédant au moins un appareil de mesure de point de remplissage (3), au moins un appareil de mesure de contrôle (4) et au moins une unité de calcul (5), l'appareil de mesure du point de remplissage (3) contrôlant le remplissage du volume cible,
l'appareil de mesure de contrôle (4) étant disposé dans l'installation de remplissage (2) de telle sorte qu'il acquiert le volume cible du fluide à remplir, contrôlé par l'appareil de mesure de point de remplissage (3), et l'appareil de mesure de point de remplissage (3) et l'appareil de mesure de contrôle (4) étant reliés à l'unité de calcul (5),
le procédé (1) présentant les étapes suivantes :
- réalisation d'une première routine de remplissage (6), la routine de remplissage (6) comprenant les étapes suivantes :
- remplissage (7) d'un volume cible sous le contrôle de l'appareil de mesure du point de remplissage (3),
- transmission (8), à l'unité de calcul (5), d'une valeur mesurée de point de remplissage de l'appareil de mesure de point de remplissage (3), la valeur mesurée de point de remplissage étant en corrélation avec le volume cible, ou présence, dans l'unité de calcul (5), d'une valeur mesurée de point de remplissage de l'appareil de mesure de point de remplissage (3), la valeur mesurée de point de remplissage étant en corrélation avec le volume cible,
- acquisition (9) du volume cible rempli par l'appareil de mesure de contrôle (4),
- transmission (10), à l'unité de calcul (5), d'une valeur mesurée de contrôle de l'appareil de mesure de contrôle (4), la valeur mesurée de contrôle étant en corrélation avec le volume cible,
- réalisation d'au moins une deuxième routine de remplissage (6), de préférence réalisation d'une pluralité de routines de remplissage (6), de telle sorte qu'au moins deux valeurs mesurées de point de remplissage de l'appareil de mesure de point de remplissage (3) et au moins deux valeurs mesurées de contrôle correspondantes soient présentes dans l'unité de calcul (5), de préférence une pluralité de valeurs mesurées de point de remplissage de l'appareil de mesure de point de remplissage (3) et une pluralité de valeurs mesurées de contrôle correspondantes étant présentes dans l'unité de calcul (5), **caractérisé en ce que** le procédé présente les étapes supplémentaires suivantes :
- détermination (11) d'une première répétabilité de l'appareil de mesure de point de remplissage (11) par l'unité de calcul à partir des valeurs mesurées de point de remplissage de l'appareil de mesure de point de remplissage et des valeurs mesurées de contrôle, et évaluation (12) de la première répétabilité,
- pour autant que la première répétabilité est supérieure à une valeur limite définie :
- variation (13) d'au moins un paramètre ou d'un jeu de paramètres destiné à la commande de l'appareil de mesure du point de remplissage, et
- réalisation d'au moins deux routines de remplissage (6) supplémentaires, l'appareil de mesure de point de remplissage étant commandé avec l'au moins un paramètre modifié ou le jeu de paramètres modifié, et détermination d'une deuxième répétabilité,
- évaluation (12) de la deuxième répétabilité par l'unité de calcul (5) comme bonne lorsque la valeur de la deuxième répétabilité est inférieure à la valeur de la première répétabilité, ou évaluation de la deuxième répétabilité par l'unité de calcul (5) comme mauvaise lorsque la valeur de la deuxième répétabilité est supérieure à la valeur de la première répétabilité.

2. Procédé selon la revendication 1, **caractérisé en ce que** l'unité de calcul fait à nouveau varier un paramètre ou un jeu de paramètres et détermine à nouveau la répétabilité, pour autant que la répétabilité est évaluée comme mauvaise et/ou
**en ce que** la deuxième répétabilité est comparée à la valeur limite et au moins un paramètre ou un jeu de paramètres fait à nouveau l'objet d'une variation, et **en ce que** la répétabilité est à nouveau déterminée et évaluée, pour autant que la deuxième répétabilité est supérieure à la valeur limite et/ou
**en ce que** la répétabilité et le paramètre ou le jeu de paramètres correspondant destiné à la commande de l'appareil de mesure de point de remplissage sont estimés optimaux lorsque la valeur de la répétabilité est inférieure à la valeur limite.

3. Procédé (1) selon la revendication 1 ou 2, **caractérisé en ce que** l'au moins un paramètre optimal ou le jeu de paramètres optimal destiné à la commande de l'appareil de mesure de point de remplissage (3) est utilisé pendant l'opération de remplissage (19).

4. Procédé (1) selon l'une des revendications 1 à 3, **caractérisé en ce que** pour la réalisation de la première routine de remplissage (6), le paramètre ou le jeu de paramètre qui est utilisé pour la commande de l'appareil de mesure de point de remplissage (3) est stocké dans l'unité de calcul (5) en tant que paramètre optimal ou en tant que jeu de paramètres optimal pour le premier fluide à remplir.

5. Procédé (1) selon l'une des revendications 1 à 3, **caractérisé en ce qu'**un capteur supplémentaire est présent pour la mesure d'une propriété du premier fluide, et **en ce qu'**avant la première routine de remplissage (6), le capteur détermine la propriété du premier fluide, et **en ce que** l'au moins un paramètre ou le jeu de paramètres destiné à la commande de l'appareil de mesure de point de remplissage (3) en vue de réaliser la première routine de remplissage (6) est sélectionné par l'unité de calcul (5) en fonction de la propriété mesurée du premier fluide.

6. Procédé (1) selon l'une des revendications 1 à 5, **caractérisé en ce que** l'appareil de mesure de point de remplissage (3) est étalonné avec un deuxième fluide, le premier fluide et le deuxième fluide étant différents, et **en ce que** lors du remplissage du premier fluide, l'appareil de mesure de point de remplissage (3) prend en compte un décalage pour le contrôle du volume cible, le décalage étant choisi en fonction du premier fluide.

7. Procédé (1) selon l'une des revendications 1 à 6, **caractérisé en ce que** l'installation de remplissage (2) comporte une pluralité de points de remplissage et une pluralité d'appareils de mesure de point de remplissage (3), un appareil de mesure de contrôle (4) étant associé à au moins deux appareils de mesure de point de remplissage (3),
et **en ce que** les au moins deux appareils de mesure de point de remplissage (3) effectuent leur propre optimisation de la répétabilité et ainsi une détermination d'un paramètre optimal ou d'un jeu de paramètres optimal destiné à la commande des appareils de mesure de point de remplissage (3) pendant l'opération de remplissage (19).

8. Procédé (1) selon l'une des revendications 1 à 6, **caractérisé en ce que** l'installation de remplissage (2) comporte une pluralité de points de remplissage et une pluralité d'appareils de mesure de point de remplissage (3), un appareil de mesure de contrôle (4) étant associé à au moins deux appareils de mesure de point de remplissage (3), et la pluralité d'appareils de mesure de point de remplissage (3) pouvant communiquer entre eux, **en ce qu'**un appareil de mesure de point de remplissage (3) communique aux autres appareils de mesure de point de remplissage (3) un paramètre ou un jeu de paramètres destiné à la commande dont la répétabilité est évaluée comme bonne, les autres appareils de mesure de point de remplissage (3) utilisant ce paramètre ou ce jeu de paramètres dans le cadre de leur optimisation de la répétabilité et/ou
**en ce qu'**un appareil de mesure de point de remplissage (3) communique aux autres appareils de mesure de point de remplissage (3) un paramètre ou un jeu de paramètres destiné à la commande dont la répétabilité est évaluée mauvaise, les autres appareils de mesure de point de remplissage (3) rejetant ce paramètre ou ce jeu de paramètres dans le cadre de leur optimisation.

9. Procédé (1) selon l'une des revendications 1 à 6, **caractérisé en ce que** l'installation de remplissage (2) comprend une pluralité de points de remplissage et une pluralité d'appareils de mesure de point de remplissage (3), un appareil de mesure de contrôle (4) n'étant associé qu'à un premier appareil de mesure de point de remplissage (3) et **en ce que** le premier appareil de mesure de point de remplissage (3) communique autres appareils de mesure de point de remplissage (3) le paramètre optimal ou le jeu de paramètres optimal destiné à la commande, pour lequel la répétabilité est inférieure à la valeur limite spécifiée, les autres appareils de mesure de point de remplissage (3) fonctionnant avec ce paramètre optimal ou avec ce jeu de paramètres optimal pendant l'opération de remplissage (19).

10. Procédé (1) selon l'une des revendications 1 à 9, **caractérisé en ce qu'**avant ou après l'optimisation de la répétabilité, la première routine de remplissage (6) présente un premier volume cible et la deuxième routine de remplissage (6) présente un deuxième volume cible, le deuxième volume cible s'écartant du premier volume cible, l'écart étant supérieur à l'écart de mesure de l'appareil de mesure de point de remplissage (3), et **en ce qu'**une synchronisation de l'appareil de mesure de point de remplissage (3) et de l'appareil de mesure de contrôle (4) reçoit une réponse positive par l'unité de calcul (5) lorsqu'à la fois l'appareil de mesure de point de remplissage (3) et l'appareil de mesure de contrôle (4) transmettent à l'unité de calcul (5), dans le cadre de la deuxième routine de remplissage, une valeur de mesure qui est en corrélation avec le deuxième volume cible.

11. Installation de remplissage (2) destinée à remplir un volume cible d'un premier fluide, l'installation de remplissage (2) possédant au moins un appareil de mesure de point de remplissage (3), au moins un appareil de mesure de contrôle (4) et au moins une unité de calcul (5),
l'appareil de mesure du point de remplissage (3) contrôlant le remplissage du volume cible,
l'appareil de mesure de contrôle (4) étant disposé dans l'installation de remplissage (2) de telle sorte qu'il acquiert le volume cible du fluide à remplir, contrôlé par l'appareil de mesure de point de remplissage (3), et l'appareil de mesure de point de remplissage (3) et l'appareil de mesure de contrôle (4) étant reliés à l'unité de calcul (5),
**caractérisée en ce que**
l'unité de calcul (5), l'au moins un appareil de mesure de point de remplissage (3) et l'appareil de mesure de contrôle (4) sont configurés pour mettre en œuvre un procédé (1) selon l'une des revendications 1 à 10.
